# EUROPEAN PATENT SPECIFICATION

(11) **EP 4 203 278 B1**
(45) Date of publication and mention of the grant of the patent: **17.07.2024**
(21) Application number: 21217491.6
(22) Date of filing: 23.12.2021
(51) Int. Cl.: H02K 15/02, H02K 1/24, H02K 15/095

(54) **A ROTOR ASSEMBLY METHOD**
ROTORMONTAGEVERFAHREN
PROCÉDÉ D'ASSEMBLAGE DE ROTOR

(43) Date of publication of application: 28.06.2023
(73) Proprietor: Valeo eAutomotive Germany GmbH, 91056 Erlangen (DE)
(72) Inventor: WOLF, Nico, 97616 Bad Neustadt a.d.Saale (DE); SCHLERETH, Alexander, 97616 Bad Neustadt a.d.Saale (DE)
(74) Representative: Valeo Powertrain Systems

(56) References cited:
- EP-A2- 0 957 561
- US-A- 3 882 336
- US-A1- 2012 080 973
- US-A1- 2020 204 022

## Description

### FIELD OF THE INVENTION

The present invention belongs to the field of rotary electric machines configured to be on board of an automotive vehicle, such as an electric vehicle (EV) or a hybrid vehicle (HV).

The present invention relates, in particular, to the field of separately excited rotors, also called wound rotors or slip ring rotors, integrated to rotary electric machines.

### BACKGROUND OF THE INVENTION

As is known, an electric or a hybrid automotive vehicle presents an electric drive comprising a rotary electric machine which needs to be supplied with electric power, for instance by a high voltage power supply battery, to deliver a mechanical power in order to ensure the propulsion of the vehicle.

In a general manner, the rotary electric machine comprises a stator, referring to a fixed part of the rotary electric machine, and a rotor, referring to a rotating part of the rotary electric machine. The rotor then comprises a rotor shaft configured to ensure the transmission of the mechanical power between the rotary electric machine and an exterior driven apparatus, notably the wheels of the vehicle.

In particular, it is known to have the rotor separately excited. This type of rotors is commonly referred as wound rotors or slip ring rotors. Such a rotor comprises a rotor body formed of a stack of laminations having a plurality of teeth projecting radially, and a field coil wound around each tooth of the teeth. The field coil is then connected to an external power supply through slip rings. The slip rings correspond to electro-mechanical devices configured to allow the exchange of electric power between the field coil, which rotates with the rotor, and the external power supply, which is fixed.

The rotary electric machine for the electric or hybrid vehicles, the rotor is designed to rotate at high speeds, which may affect the holding of the field coil due to centrifugal forces. If the field coil is not precisely and firmly wound on the teeth of the rotor body, a malfunction of the rotor may occur.

In this context, the main objective of the present invention is to provide a rotor assembly method allowing to precisely and firmly wind the field coil around each tooth of the teeth of the rotor.

Documents US2020/204022A1, EP0 957 561 A2, US 2012/080973A1 and US 3 882 336 A disclose related rotor assembly methods of the prior art.

### SUMMARY OF THE INVENTION

The present invention concerns a rotor assembly method comprising an assembly step, a compression step and a compacting step. The assembly step is configured to install a stack of laminations on a rotor shaft of a rotor, wherein the stack of laminations comprises an inner portion and an outer portion which is, compared to the inner portion, more distant to the rotor shaft. The compression step consists of compressing the inner portion to provoke accordingly a fan-out of the outer portion, so as to form a compact inner portion and a fan-out outer portion. The compacting step consists of compacting the fan-out outer portion to form a compact outer portion. A compact lamination package comprising the compact inner portion and the compact outer portion is thus formed.

Therefore, the rotor assembly method according to the present invention allows to form a rotor comprising a compact lamination package and to precisely and firmly wind a field coil on the compact lamination package of the rotor body. Indeed, after a field coil is wound on the compact outer portion, a pretension of the field coil is ensured and allows advantageously the field coil to be precisely and firmly wound on the compact lamination package of the rotor. The risk of mispositioning the field coil on the rotor body occurred in the rotor assembly phase or during operation of the rotor, is thus significantly reduced or completely avoided.

According to an embodiment, the compacting step comprises applying an axial force on two axial ends of the fan-out outer portion.

Advantageously, the compacting step comprises using a pressing device to apply the axial force, the pressing device being in contact with the two axial ends of the fan-out outer portion.

Preferably, the pressing device is removed after the compact outer portion is obtained and the field coil is wound on the compact outer portion.

According to an embodiment, the compacting step comprises using a tension applied by the field coil being wound on the fan-out outer portion during a winding step.

Advantageously, the compression step comprises using two compression elements to apply a pre-defined compression force on two axial ends of the inner portion in order to form the compact inner portion, wherein the compression elements are not in contact with the axial ends of the outer portion.

Preferably, one of the compression elements is a shoulder extending from the rotor shaft, and the other one of the compression elements is a lock-nut.

According to an embodiment, a distance between two axial ends of the fan-out outer portion is greater than a distance between two axial ends of the compact inner portion.

Advantageously, the compact lamination package comprises teeth projecting radially, and the pretension of the field coil ensures that the field coil is precisely and firmly wound on each of the tooth of the teeth.

Furthermore, the present invention concerns a rotor being manufactured by using a rotor assembly method as mentioned above.

Preferably, the rotor is a separately excited rotor for an electrically excited synchronous motor (EESM).

According to an aspect of the invention, the invention relates to a rotary electric machine comprising the rotor as described previously and a stator.

Another aspect of the invention is an electric drive, comprising the rotary electric machine and an inverter configured to convert a direct current voltage coming from a high-voltage power supply battery into an alternating current voltage so as to drive the rotary electric machine. The AC voltage may be a multiphase AC voltage, especially a three-phase voltage.

A further aspect of the invention is an electric of a hybrid vehicle, comprising the electric drive for driving the vehicle. The vehicle may comprise the high-voltage power supply battery, preferably a rechargeable battery for providing the DC voltage to the inverter, if applicable.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

The invention will be better understood on reading the description that follows, and by referring to the appended drawings given as non-limiting examples, in which identical references are given to similar objects and in which:
- Figure 1 illustrates a partial view of an example of a rotor according to an embodiment of the invention;
- Figures 2 to 6 illustrate a perspective view of a projection of a half of the rotor during each of steps of a rotor assembly method according to an embodiment of the invention;
- Figure 7 is a flowchart of the steps of the rotor assembly method according to an embodiment of the invention; and
- Figure 8 is a schematic diagram of an automotive electric or hybrid vehicle comprising the rotor of a rotary electric machine according to an embodiment of the invention.

### DETAILED DESCRIPTION

Several embodiments of the present invention will be detailed hereafter with reference to the drawings. It will be apparent to those skilled in the art from this present disclosure that the following description of these embodiments of the present invention are provided for illustration only and not for the purpose of limiting the invention as defined by the appended claims and their equivalents.

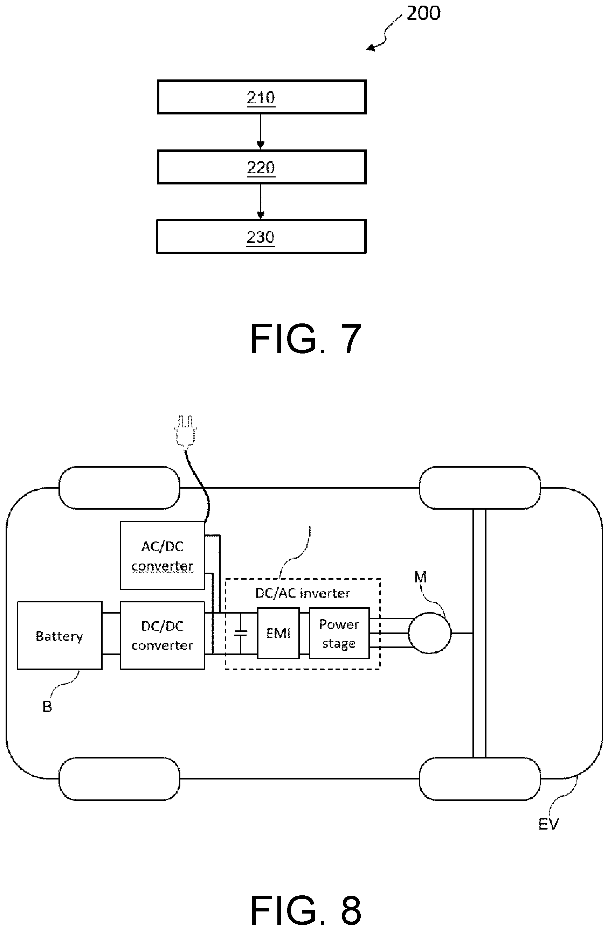

In reference to Figure 8, an aspect of the invention is an electric vehicle or a hybrid electric automotive vehicle (EV) comprising wheels and an electric drive configured to drive at least indirectly at least one of the wheels of the vehicle. The vehicle may comprise a high-voltage power supply battery B, preferably a rechargeable battery, for providing electric power to the electric drive. Although, the invention is not limited to this domain.

Another aspect of the invention is the electric drive comprising a rotary electric machine (i.e., an electric motor) M and an inverter I configured to convert a direct current (DC) voltage coming from the high-voltage power supply battery B into an alternating current (AC) voltage in order to drive the rotary electric machine M. The rotary electric machine M may in particular be a three-phase rotary electric machine supplied with a three-phase AC voltage.

The invention also relates to the rotary electric machine comprising a stator, referring to a fixed part of the rotary electric machine, and a rotor, referring to a rotating part of the rotary electric machine. The rotor 1 is, preferably, a separately excited rotor, also commonly referred as a wound rotor or a slip ring rotor for an electrically excited synchronous motor (EESM). More precisely, the stator presents a cylinder shape and surrounds coaxially the rotor 1. Then, the rotary electric machine comprises a casing covering both the stator and the rotor 1. Ordinarily, the stator comprises a stator body formed of a stack of stator laminations having a plurality of stator teeth projecting radially, and stator windings wound around the stator teeth.

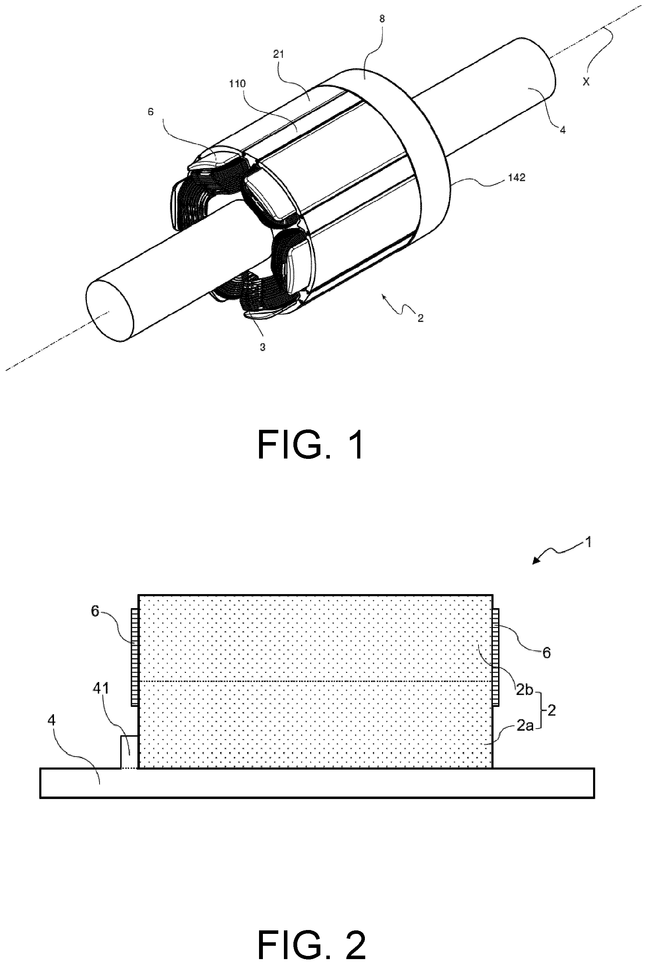

Figure 1 illustrates a partial view of an example of the rotor 1 according to a further aspect of the invention. The rotor 1 presents a shape of a cylinder and comprises a rotor shaft 4 configured to rotate around a rotation axis 1X, a rotor body 2 comprising a lamination package formed of a stack of laminations having a plurality of teeth 21 projecting radially, and at least one field coil 3 wound around each tooth of the teeth 21. A rotor assembly method 200 allowing to precisely and firmly wind the field coil 3 on the rotor body 2 (or more precisely, on the teeth 21 of the rotor 1), will be described in detail in the following paragraphs.

The laminations of the rotor body 2 are especially stacked along the rotation axis 1X. The invention is not limited to the number of teeth 21. The teeth 21 may notably comprise four, six, or eight teeth for example. The rotor body 2 is configured to be mounted coaxially on the rotor shaft 4, For instance, the rotor body 2 may be press-fitted on the rotor shaft 4. The rotor body 2 is for example made of steel or silicone steel.

The field coil 3 is then connected to an external power supply through at least one slip ring (not represented) mounted on the rotor shaft 4, namely on an axial end of the rotor shaft 4. The field coil 3 is preferably made of copper. The slip rings especially correspond to electro-mechanical devices configured to allow the exchange of electric power between a rotating element and a fixed element, here respectively the field coil 3 and the external power supply. The rotor 1 may further comprise a holder such that the slip rings are mounted on the rotor shaft 4 through the holder.

The rotor 1 may further comprise two end plates 6, as represented in Figure 1, configured to come respectively against two axial ends of the rotor body 2. Only one of the two axial ends of the rotor body 2 is represented as "142" in Figure 1. The two end plates 6 notably present each an annular shape, substantially similar to the shape of the two axial ends of the rotor body 2 such that to be able to cover the two axial ends. Then, the field coil 3 advantageously passes over the two end plates 6. In other words, the two end plates 6 are located between the rotor body 2 and the coil ends of the field coil 3 such that to provide a mechanical holding of the stack of laminations and to electrically insulate axially the field coil 3 from the rotor body 2.

The rotor 1 further comprises wedge elements 110 extending axially and arranged in slots respectively located between two adjacent teeth of the teeth 21. Then, the slots are notably filled with a filling material, for instance a resin, so as to fixate the field coil 3. The field coil 3 is thus prevented from moving due to centrifugal forces during in-service life of the rotor. The rotor 1 advantageously comprises two end caps 8 coming against two axial ends of the rotor body 2.

Figures 2 to 6 illustrate a perspective view of a projection of a half of the rotor 1 during each of steps 210 to 230 of the rotor assembly method 200, according to an embodiment of the invention. Figure 7 is a flowchart of the steps 210 to 230 of the rotor assembly method 200 according to an embodiment of the invention.

The assembly step 210 is configured to install the stack of laminations of the rotor body 2 on the rotor shaft 4, as illustrated in Figure 2. The stack of laminations comprises an inner portion 2a and an outer portion 2b. Compared to the inner portion 2a, the outer portion 2b is more distant to the rotor shaft 4. Preferably, the inner portion 2a presents a diameter substantially equal to a half of a diameter of the rotor body 2.

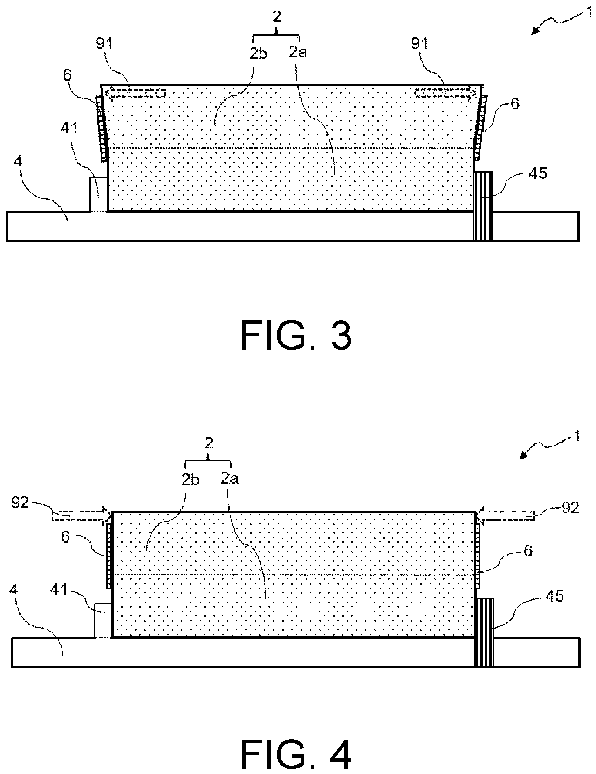

The compression step 220 consists of compressing the inner portion 2a by a pre-defined compression force to provoke, accordingly, a fan-out (e.g., indicated by arrows "91" in Figure 3) of the outer portion 2b of the stack of laminations, so as to form a compact inner portion 2a and a fan-out outer portion 2b. A distance between two axial ends of the fan-out outer portion 2b is thus greater than a distance between two axial ends of the compact inner portion 2a, as illustrated in Figure 3.

According to an embodiment, the compression step 220 comprises using two compression elements 41, 45 to apply the pre-defined compression force on the two axial ends of the inner portion 2a in order to form the compact inner portion 2a. The compression elements 41, 45 are in contact with the two axial ends of the inner portion 2a, and not in contact with the two axial ends of the outer portion 2b. Preferably, one of the compression elements is a shoulder 41 extending from the rotor shaft 4, and the other one of the compression elements is preferably a lock-nut 45. The lock-nut 45 may be removed after the compression step 220. Alternatively, the lock-nut 45 is not removed after the compressing step 220 and stays thus permanently on the rotor 1.

The compacting step 230, consisting of compacting the fan-out outer portion 2b to form a compact outer portion 2b, is then performed. The distance between the two axial ends of the compact outer portion 2b is thus equal to that between the two axial ends of the compact inner portion 2a. Therefore, by performing the steps 220 and 230, the stack of laminations of the rotor 1 is compacted to form a compact lamination package comprising the compact inner portion 2a and the compact outer portion 2b. The compact lamination package, or more precisely, the compact outer portion 2b, comprises the teeth 21 projecting radially.

According to an embodiment, the compacting step 230 comprises applying an axial force 92 on the two axial ends of the fan-out outer portion 2b, as illustrated in Figure 4. The axial force 92 is applied, for example, by a pressing device which is in contact with the two axial ends of the fan-out outer portion 2b. The field coil 3 is then wound on the compact outer portion 2b.

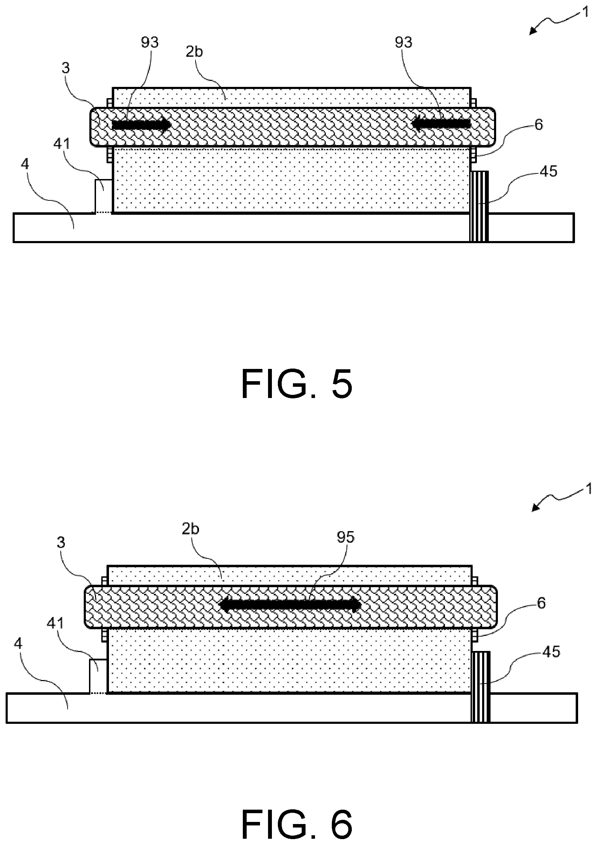

Alternatively, the compacting step 230 comprises using a tension 93 applied by the field coil 3 being wound on the fan-out outer portion 2b during a winding step, as illustrated in Figure 5. The tension 93 is transferred into the fan-out outer portion 2b, which results in compacting the fan-out outer portion 2b. In the present embodiment, no pressing device is utilized.

According to another embodiment, the compacting step 230 comprises, not only applying the above-mentioned axial force 92, but also using the tension 93 applied by the field coil 3 wound on the outer portion 2b.

Then, after the field coil 3 is wound on the compact lamination package, a pretension 95 of the field coil 3 ensures that the field coil 3 is precisely and firmly wound on each tooth of the teeth 21 of the compact lamination package of the rotor 1, as illustrated in Figure 6.

In the embodiments where a pressing device is utilized in the compacting step 230 to apply the axial force 92, the pressing device is removed after the field coil 3 is wound on the compact outer portion 2b of the compact lamination package.

The rotor assembly method according to the invention allows thus to form a rotor comprising a compact lamination package and to precisely and firmly wind a field coil around each tooth of the teeth of the compact lamination package. The risk of mispositioning the field coil on the rotor body occurred in the rotor assembly phase or during operation of the rotor, is significantly reduced or completely avoided.

Although embodiments have been described with reference to a number of illustrative embodiments thereof, it should be understood that numerous other modifications and embodiments can be devised by those skilled in the art that will fall within the spirit and scope of the principles of this disclosure.

## Claims

1. A rotor assembly method (200), comprising:
- an assembly step (210) configured to install a stack of laminations on a rotor shaft (4) of a rotor (1), wherein the stack of laminations comprises an inner portion (2a) and an outer portion (2b) which is, compared to the inner portion (2a), more distant to the rotor shaft (4);
- a compression step (220) consisting of compressing the inner portion (2a) to provoke accordingly a fan-out of the outer portion (2b), so as to form a compact inner portion (2a) and a fan-out outer portion (2b); caracterised in that it further comprises
- a compacting step (230) consisting of compacting the fan-out outer portion (2b) to form a compact outer portion (2b); a compact lamination package comprising the compact inner portion (2a) and the compact outer portion (2b) being thus formed.

2. The rotor assembly method (200) according to the preceding claim, wherein the compacting step (230) comprises applying an axial force (92) on two axial ends of the fan-out outer portion (2b).

3. The rotor assembly method (200) according to the preceding claim, wherein the compacting step (230) comprises using a pressing device to apply the axial force (92), the pressing device being in contact with the two axial ends of the fan-out outer portion (2b).

4. The rotor assembly method (200) according to the preceding claim, wherein after the compact outer portion (2b) is obtained and the field coil (3) is wound on the compact outer portion (2b), the pressing device is removed.

5. The rotor assembly method (200) according to any one of the preceding claims, wherein the compacting step (230) comprises using a tension (93) applied by the field coil (3) being wound on the fan-out outer portion (2b) during a winding step.

6. The rotor assembly method (200) according to any one of the preceding claims, wherein the compression step (220) comprises using two compression elements (41, 45) to apply a pre-defined compression force on two axial ends of the inner portion (2a) in order to form the compact inner portion (2a), wherein the compression elements (41, 45) are not in contact with the axial ends of the outer portion (2b).

7. The rotor assembly method (200) according to the preceding claim, wherein one of the compression elements is a shoulder (41) extending from the rotor shaft (4), and the other one of the compression elements is a lock-nut (45).

8. The rotor assembly method (200) according to any one of preceding claims, wherein a distance between two axial ends of the fan-out outer portion (2b) is greater than a distance between two axial ends of the compact inner portion (2a).

9. The rotor assembly method (200) according to any one of preceding claims, wherein the compact lamination package comprises teeth (21) projecting radially, and a pretension (95) of the field coil (3) ensures that the field coil (3) is precisely and firmly wound on each of the tooth of the teeth (21).

10. A rotor (1) being manufactured by using a rotor assembly method (200) according to any one of the preceding claims.

11. The rotor (1) according to the preceding claim, being a separately excited rotor for an electrically excited synchronous motor (EESM).

## Patentansprüche

1. Rotormontageverfahren (200), umfassend:
- einen Montageschritt (210), der dazu ausgelegt ist, einen Stapel von Lamellen auf einer Rotorwelle (4) eines Rotors (1) zu installieren, wobei der Stapel von Lamellen einen inneren Abschnitt (2a) und einen äußeren Abschnitt (2b), der im Vergleich zu dem inneren Abschnitt (2a) weiter von der Rotorwelle (4) entfernt ist, umfasst;
- einen Kompressionsschritt (220), bestehend aus Komprimieren des inneren Abschnitts (2a), um entsprechend ein Auffächern des äußeren Abschnitts (2b) zu provozieren zum Bilden eines kompakten inneren Abschnitts (2a) und eines aufgefächerten äußeren Abschnitts (2b); **dadurch gekennzeichnet, dass** er ferner Folgendes umfasst
- einen Kompaktierungsschritt (230), bestehend aus Kompaktieren des aufgefächerten äußeren Abschnitts (2b) zum Bilden eines kompakten äußeren Abschnitts (2b); wobei dadurch ein kompaktes Lamellenpaket gebildet wird, das den kompakten inneren Abschnitt (2a) und den kompakten äußeren Abschnitt (2b) umfasst.

2. Rotormontageverfahren (200) nach dem vorhergehenden Anspruch, wobei der Kompaktierungsschritt (230) das Aufbringen einer axialen Kraft (92) auf zwei axiale Enden des aufgefächerten äußeren Abschnitts (2b) umfasst.

3. Rotormontageverfahren (200) nach dem vorhergehenden Anspruch, wobei der Kompaktierungsschritt (230) Verwenden einer Pressvorrichtung zum Aufbringen der axialen Kraft (92) umfasst, wobei die Pressvorrichtung in Kontakt mit den zwei axialen Enden des aufgefächerten äußeren Abschnitts (2b) ist.

4. Rotormontageverfahren (200) nach dem vorhergehenden Anspruch, wobei, nachdem der kompakte äußere Abschnitt (2b) erhalten ist und die Feldspule (3) auf den kompakten äußeren Abschnitt (2b) gewickelt ist, die Pressvorrichtung entfernt wird.

5. Rotormontageverfahren (200) nach einem der vorhergehenden Ansprüche, wobei der Kompaktierungsschritt (230) Verwenden einer Spannung (93) umfasst, die durch die Feldspule (3) angewendet wird, die während eines Wicklungsschritts auf den aufgefächerten äußeren Abschnitt (2b) gewickelt wird.

6. Rotormontageverfahren (200) nach einem der vorhergehenden Ansprüche, wobei der Kompressionsschritt (220) Verwenden von zwei Kompressionselementen (41, 45) zum Anwenden einer vordefinierten Kompressionskraft auf zwei axiale Enden des inneren Abschnitts (2a) umfasst, um den kompakten inneren Abschnitt (2a) zu bilden, wobei die Kompressionselemente (41, 45) nicht in Kontakt mit den axialen Enden des äußeren Abschnitts (2b) sind.

7. Rotormontageverfahren (200) nach dem vorhergehenden Anspruch, wobei eines der Kompressionselemente eine Schulter (41) ist, die sich von der Rotorwelle (4) erstreckt, und das andere der Kompressionselemente eine Kontermutter (45) ist.

8. Rotormontageverfahren (200) nach einem der vorhergehenden Asprüche, wobei ein Abstand zwischen zwei axialen Enden des aufgefächerten äußeren Abschnitts (2b) größer als ein Abstand zwischen zwei axialen Enden des kompakten inneren Abschnitts (2a) ist.

9. Rotormontageverfahren (200) nach einem der vorhergehenden Ansprüche, wobei das kompakte Lamellenpaket Zähne (21) umfasst, die radial herausragen, und wobei eine Vorspannung (95) der Feldspule (3) sicherstellt, dass die Feldspule (3) präzise und fest an jedem einzelnen Zahn der Zähne (21) aufgewickelt ist.

10. Rotor (1), der durch Verwendung eines Rotormontageverfahrens (200) nach einem der vorhergehenden Ansprüche hergestellt ist.

11. Rotor (1) nach dem vorhergehenden Anspruch, der ein getrennt erregter Rotor für einen elektrisch erregten Synchronmotor (EESM) ist.

## Revendications

1. Procédé d'assemblage de rotor (200), comprenant :
- une étape d'assemblage (210) configurée pour installer un empilement de strates sur un arbre de rotor (4) d'un rotor (1), dans lequel l'empilement de strates comprend une partie intérieure (2a) et une partie extérieure (2b) qui est, par comparaison avec la partie intérieure (2a), plus distante de l'arbre de rotor (4) ;
- une étape de compression (220) consistant à comprimer la partie intérieure (2a) pour provoquer en conséquence un élargissement de la partie extérieure (2b), afin de former une partie intérieure compacte (2a) et une partie extérieure élargie (2b) ; **caractérisé en ce qu'**il comprend en outre
- une étape de compactage (230) consistant à compacter la partie extérieure élargie (2b) pour former une partie extérieure compacte (2b) ; un ensemble compact de strates comprenant la partie intérieure compacte (2a) et la partie extérieure compacte (2b) étant ainsi formée.

2. Procédé d'assemblage de rotor (200) selon la revendication précédente, dans lequel l'étape de compactage (230) comprend l'application d'une force axiale (92) sur deux extrémités axiales de la partie extérieure élargie (2b).

3. Procédé d'assemblage de rotor (200) selon la revendication précédente, dans lequel l'étape de compactage (230) comprend l'utilisation d'un dispositif de pression pour appliquer la force axiale (92), le dispositif de pression étant en contact avec les deux extrémités axiales de la partie extérieure élargie (2b).

4. Procédé d'assemblage de rotor (200) selon la revendication précédente, dans lequel après que la partie extérieure compacte (2b) est obtenue et la bobine de champ (3) est enroulée sur la partie extérieure compacte (2b), le dispositif de pression est enlevé.

5. Procédé d'assemblage de rotor (200) selon l'une quelconque des revendications précédentes, dans lequel l'étape de compactage (230) comprend l'utilisation d'une tension (93) appliquée par la bobine de champ (3) enroulée sur la partie extérieure élargie (2b) durant un étape d'enroulement.

6. Procédé d'assemblage de rotor (200) selon l'une quelconque des revendications précédentes, dans lequel l'étape de compression (220) comprend l'utilisation de deux éléments de compression (41, 45) pour appliquer une force de compression prédéfinie sur deux extrémités axiales de la partie intérieure (2a) afin de former la partie intérieure compacte (2a), dans lequel les éléments de compression (41, 45) ne sont pas en contact avec les extrémités axiales de la partie extérieure (2b).

7. Procédé d'assemblage de rotor (200) selon la revendication précédente, dans lequel un des éléments de compression est un épaulement (41) s'étendant depuis l'arbre de rotor (4), et l'autre des éléments de compression est un écrou de blocage (45).

8. Procédé d'assemblage de rotor (200) selon l'une quelconque des revendications précédentes, dans lequel une distance entre deux extrémités axiales de la partie extérieure élargie (2b) est supérieure à une distance entre deux extrémités axiales de la partie intérieure compacte (2a).

9. Procédé d'assemblage de rotor (200) selon l'une quelconque des revendications précédentes, dans lequel l'ensemble compact de strates comprend des dents (21) faisant saillie radialement, et une pré-tension (95) de la bobine de champ (3) garantit que la bobine de champ (3) soit enroulée précisément et fermement sur chaque dent des dents (21).

10. Rotor (1) fabriqué en utilisant un procédé d'assemblage de rotor (200) selon l'une quelconque des revendications précédentes.

11. Rotor (1) selon la revendication précédente, qui est un rotor excité séparément pour un moteur synchrone à excitation électrique (EESM).
